# DEMANDE DE BREVET EUROPEEN

(11) **EP 1 394 653 A1**
(43) Date de publication de la demande: **03.03.2004**
(21) Numéro de dépôt: 03292097.7
(22) Date de dépôt: 26.08.2003
(51) Int. Cl.: G05G 9/047, F16H 59/02

(54) **Système de commande de commutation en chaîne**

(30) Priorité: 28.08.2002 FR 0210670
(71) Demandeur: SC2N, 78180 Montigny-le-Bretonneux (FR)
(72) Inventeur: Hallet, Michel, 14320 Clinchamps sur Orne (FR); Lerenard, Daniel, 14120 Mondeville (FR)
(74) Mandataire: Texier, Christian

(57) **Abrégé**

L'invention concerne un système de commande de commutation (1) destiné à un véhicule automobile comprenant un premier mécanisme de commutation (20) apte à réaliser une première fonction, un deuxième mécanisme de commutation (30) apte à réaliser une deuxième fonction et un élément de commande (10) apte à mettre en oeuvre les deux mécanismes de commutation, caractérisé en ce que l'élément de commande est apte à mettre en oeuvre l'un des deux mécanismes par l'intermédiaire de l'autre mécanisme.

## Description

L'invention concerne des systèmes de commande de commutation destinés à un véhicule automobile, notamment destinés pour être placés dans des hauts de colonne de direction.

Actuellement, les systèmes de commande de commutation destinés à piloter deux fonctions ou plus à partir du même élément de commande sont regroupés dans un boîtier dont les commutateurs à l'intérieur sont agencés de sorte qu'une fonction soit actionnée selon un mouvement donné de l'élément de commande. Cela conduit à des boîtiers relativement volumineux qui nécessitent la présence d'un volume disponible suffisant au niveau du haut de colonne de direction sous le volant de direction d'un véhicule automobile. De plus, le regroupement de plusieurs fonctions dans un boîtier de commande unique nécessite un mécanisme de commutation compliqué avec une gestion complexe des mouvements de l'élément de commande qui vont mettre en oeuvre lesdites fonctions.

Un but de l'invention est de fournir un système de commande de commutation d'au moins deux fonctions qui présentent une structure simple tout en occupant un volume minimum pour son installation.

Pour cela, on prévoit selon l'invention un système de commande de commutation destiné à un véhicule automobile comprenant un premier mécanisme de commutation apte à réaliser une première fonction, un deuxième mécanisme de commutation apte à réaliser une deuxième fonction, un élément de commande apte à mettre en oeuvre les deux mécanismes de commutation, l'élément de commande étant apte à mettre en oeuvre l'un des deux mécanismes par l'intermédiaire de l'autre mécanisme. Ainsi, chaque mécanisme présente une structure uniquement dédiée à la réalisation de la fonction qui lui est associée et mise en oeuvre par un mouvement simple de type rotation ou translation, ce qui permet des volumes de mécanismes réduits au minimum. De plus, la mise en chaîne des mécanismes permet de les commander avec un seul élément de commande de manière simple et facile. En effet, le mécanisme se trouvant en bout de chaîne a comme élément de commande le mécanisme qui le précède dans la chaîne.

Avantageusement, mais facultativement, le système de commande de commutation présente au moins l'une des caractéristiques suivantes :
- l'élément de commande est directement lié à l'autre des deux mécanismes,
- les mises en oeuvre des mécanismes sont indépendantes l'une de l'autre,
- la réalisation de l'une des fonctions est dépendante de la réalisation de l'autre fonction,
- la réalisation de l'une des fonctions est indépendante de la réalisation de l'autre fonction,
- le système de commande de commutation est situé au niveau d'un haut de colonne de direction,
- le système de commande de commutation est situé sous un volant de direction,
- le système de commutation est destiné à commander une boîte de vitesse.

D'autres caractéristiques et avantages de l'invention apparaîtront lors de la description ci-après d'un mode de réalisation préféré. Aux dessins annexés :
- la figure 1 est un schéma de principe de l'invention, et
- la figure 2 est un mode de réalisation particulier du principe de l'invention de la figure 1.

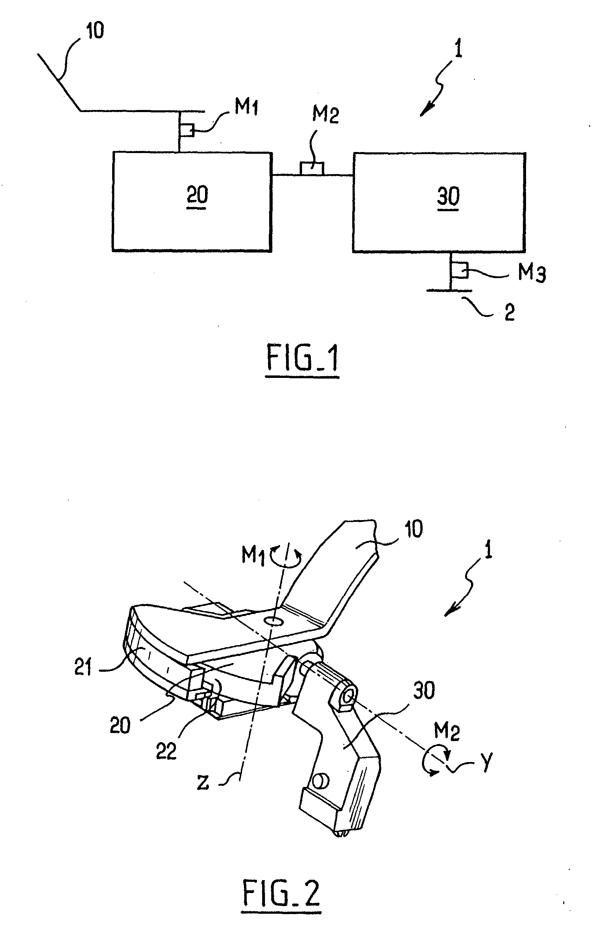

En référence à la figure 1, selon le schéma de principe qui y est représenté, un système de commande de commutation 1 destiné à réaliser une série de fonctions comprend un élément de commande 10, un premier mécanisme de commutation 20 apte à réaliser une première fonction et un deuxième mécanisme de commutation 30 apte à réaliser une deuxième fonction. L'élément de commande 10 est directement lié au premier mécanisme 20, qu'il met en oeuvre selon un mouvement M1. Le premier mécanisme 20 est lié au deuxième mécanisme 30 qu'il met en oeuvre selon un mouvement M2 de préférence différent du mouvement M1. Optionnellement, le mécanisme 30 peut être lié au point de montage de l'ensemble du système de commutation 1 et peut de manière optionnelle effectuer un mouvement M3 par rapport à ce point de montage. De même, le mouvement M3 peut être différent des mouvements M1 et M2.

Un tel montage de l'ensemble des mécanismes permet de piloter avec le seul élément de commande 10 l'ensemble des mécanismes de commutation. Si un utilisateur agit sur l'élément de commande 10 selon le mouvement M1 seul, le mécanisme de commutation 20 est mis en oeuvre de manière à réaliser la fonction qui lui est dédiée. En effet, comme les mouvements M2 et M3 sont différents du mouvement M1, le mécanisme 20 ne peut mettre en oeuvre le mécanisme de commutation 30 car le mouvement M2 n'est pas réalisé par l'utilisateur sur l'élément de commande 10 qui ne peut, par conséquent, lui faire effectuer le mouvement M2. De même, le mécanisme 30 ne peut mettre en oeuvre le mécanisme non représenté qui peut être intégré au niveau du point de montage 2, car le mouvement M3 n'est pas effectué par l'élément de commande 10 qui ne peut, par conséquent, le transmettre ni au mécanisme 20 ni au mécanisme 30. D'autre part, si l'utilisateur agit sur l'élément de commande 10 selon le mouvement M2, l'élément de commande 10 ne peut mettre en oeuvre le mécanisme de commutation 20 car l'élément de commande n'effectue pas le mouvement M1. Cependant, il entraîne le mécanisme de commutation 20 dans le même mouvement M2 que ce dernier transmet directement au mécanisme de commutation 30 de manière à réaliser la fonction qui est dédiée au mécanisme de commutation 30. Ainsi, le mécanisme de commutation 20 ne réalise pas la fonction qui lui est dédiée mais sert d'intermédiaire pour commander le mécanisme de commutation 30. Il en est de même lorsque l'utilisateur fait effectuer à l'élément de commande 10 le mouvement M3 qui, étant différent des mouvements M1 et M2, ne peut mettre en oeuvre le mécanisme de commutation 20 ni le mécanisme de commutation 30. Les mécanismes de commutation 20 et 30 jouent alors le rôle d'intermédiaires entre l'élément de commande 10 et le mécanisme de commutation mise en oeuvre par le mouvement M3 et intégré au point de montage 2.

Il est à noter que cette chaîne d'entrainement peut comporter un quatrième mécanisme de commutation voire plus. Une telle structure de l'invention lui procure une modularité d'une part, ainsi qu'un positionnement relatif des différents mécanismes de commutation les uns par rapport aux autres optimisable pour être intégré dans un volume donné, d'autre part.

Un exemple d'application du principe précédemment décrit est illustré en figure 2. Le système de commande de commutation 1 de la figure 2 est ici un système de commande de commutation destiné à piloter une boîte de vitesse qui peut fonctionner soit en mode automatique soit en mode séquentiel. Le système de commande de commutation 1 est destiné à être positionné sous un volant de direction d'un véhicule automobile au niveau d'un haut de colonne de direction.

Le système de commande de commutation 1 comprend une palette 10 faisant office d'élément de commande lié à un premier mécanisme de commutation 20 dont la fonction est le choix du mode de fonctionnement de la boîte de vitesse en mode automatique. Pour cela, la palette 10 est montée à rotation selon un axe Z par rapport au support principal 22 du mécanisme de commutation 20. La palette 10, lors du mouvement de rotation M1 autour de l'axe Z entraîne dans le même mouvement un sélecteur 21 qui peut prendre, dans le cas présent, quatre positions différentes correspondant chacun à un mode de fonctionnement de la boîte de vitesse automatique :
- le premier mode R a pour but d'enclencher la marche arrière de la boîte de vitesse,
- un deuxième mode N ou neutre dans lequel aucune vitesse n'est enclenchée au niveau de la boîte de vitesse,
- un mode D qui positionne la boîte de vitesse dans un mode automatique géré de manière connue selon la vitesse du véhicule et le régime du moteur, et
- un quatrième mode M ou mode manuel dans lequel la boîte de vitesse enclenche le rapport choisi par le conducteur lui-même.

Le deuxième mécanisme de commutation 30 du système de commande de commutation de boîte de vitesse 1 est lié, selon un axe Y, au mécanisme de commutation 20 précédemment décrit. La mise en oeuvre de ce mécanisme de commutation 30 se fait selon un mouvement M2 de rotation autour d'un axe Y. Il est à noter que l'axe Y est ici sensiblement perpendiculaire à l'axe Z, ayant pour conséquence que le mouvement de rotation M2 est différent du mouvement de rotation M1. Le mécanisme de commutation 30 réalise, dans le cas présent, la commande séquentielle de la boîte de vitesse lorsque celle-ci est en mode manuel. De manière préférentielle, le mécanisme permet de sélectionner un seul état de la fonction séquentielle qui est soit de monter les rapports de la boîte de vitesse, soit de les descendre. Dans une variante de réalisation, le mécanisme de commutation 30 peut activer les deux modes de manière exclusive. La mise en oeuvre du mécanisme de commutation 30 s'effectue via l'intermédiaire du mécanisme de commutation 20 auquel il est rattaché. En effet, lorsque l'utilisateur fait effectuer à la palette 10 un mouvement de rotation M2, la palette 10 ne peut se déplacer selon ce mouvement M2, par rapport au mécanisme de commutation 20. De ce fait, la palette 10 entraîne dans le mouvement de rotation M2 le mécanisme de commutation 20. De ce fait, c'est le mécanisme de commutation 20, monté à rotation selon l'axe Y par rapport au mécanisme de commutation 30, qui met en oeuvre le mécanisme 30 de manière à réaliser la fonction de commande séquentielle de la boîte de vitesse.

Il est à noter que lorsque la palette 10 effectue le mouvement M1, il est impossible que le mécanisme de commutation 20 met en oeuvre le mécanisme de commutation 30 lors de ce mouvement M1, car les deux mécanismes sont montés selon un autre mouvement de rotation différent M2 l'un par rapport à l'autre.

Bien entendu, on peut apporter à l'invention de nombreuses modifications sans sortir du cadre de celle-ci.

## Revendications

1. Système de commande de commutation (1) destiné à un véhicule automobile comprenant un premier mécanisme de commutation (20) apte à réaliser une première fonction, un deuxième mécanisme de commutation (30) apte à réaliser une deuxième fonction et un élément de commande (10) apte à mettre en oeuvre les deux mécanismes de commutation, **caractérisé en ce que** l'élément de commande est apte à mettre en oeuvre l'un des deux mécanismes par l'intermédiaire de l'autre mécanisme.

2. Système selon la revendication 1, **caractérisé en ce que** l'élément de commande est directement lié à l'autre des deux mécanismes.

3. Système selon la revendication 1 ou 2, **caractérisé en ce que** les mises en oeuvre des mécanismes sont indépendantes l'une de l'autre.

4. Système selon la revendication 1, 2 ou 3, **caractérisé en ce que** la réalisation de l'une des fonctions est dépendante de la réalisation de l'autre fonction.

5. Système selon l'une des revendications 1 à 3, **caractérisé en ce que** la réalisation des deux fonctions est indépendante l'une de l'autre.

6. Système selon l'une des revendications 1 à 5, **caractérisé en ce que** le système de commande de commutation (1) est situé au niveau d'un haut de colonne de direction du véhicule automobile.

7. Système selon la revendication 6, **caractérisé en ce que** le système de commande de commutation est situé sous un volant.

8. Système selon l'une des revendications 1 à 7, **caractérisé en ce que** le système de commande commutation (1) est destiné à commander une boîte de vitesse du véhicule automobile.
